# FASCICULE DE BREVET EUROPEEN

(11) **EP 0 729 698 B1**
(45) Date de publication et mention de la délivrance du brevet: **14.06.2000**
(21) Numéro de dépôt: 96400412.1
(22) Date de dépôt: 28.02.1996
(51) Int. Cl.: A01C 15/00

(54) **Semoir à trémie unique**
Sähmaschine mit ein Saatkasten
Seed drill with one hopper

(30) Priorité: 01.03.1995 FR 9502347
(43) Date de publication de la demande: 04.09.1996
(73) Titulaire: MAASLAND N.V., 3155 PD Maasland (NL)
(72) Inventeur: Charles, Stéphane, 72000 Le Mans (FR)
(74) Mandataire: Loyer, Bertrand

(56) Documents cités:
- EP-A- 0 124 491
- DE-C- 359 392
- FR-A- 2 691 039
- GB-A- 2 103 175
- GB-A- 2 216 762

## Description

La présente invention concerne d'une manière générale les semoirs mis en oeuvre dans l'agriculture et plus spécialement un semoir comportant une trémie centrale unique supportée par un bâti.

Un tel semoir est par exemple décrit dans le EP 0 124 491. La trémie du semoir proposé dans ce document présente une section globalement en U, avec un fond cylindrique prolongé par des portions planes se raccordant à une face plane, dans laquelle est montée une porte destinée à permettre l'accès à l'intérieur de la trémie. La trémie présente également un prolongement globalement radial, terminé par un moyen de distribution du grain, disposé entre ladite face plane et l'une des portions planes. La trémie est montée mobile en rotation autour d'un axe horizontal longitudinal disposé au centre du fond cylindrique. Ce montage permet de déplacer la trémie, par rotation autour dudit axe, entre une position pour laquelle la face plane constitue la face supérieure horizontale de la trémie, de manière à permettre le remplissage de celle-ci en ouvrant la porte, et une position pour laquelle la face plane constitue une face latérale verticale de la trémie et le moyen de distribution du grain est positionné au-dessus d'un conduit amenant le grain à un élément semeur.

Une telle disposition nécessite de prévoir des moyens, tels que des échelles, permettant d'accéder sur le dessus de la trémie pour le remplissage.

Un autre semoir est connu du document FR 93 06022.

Il est proposé dans ce document, de déplacer la trémie parallèlement à elle-même depuis une position de fonctionnement proche du tracteur jusqu'à une position basse de remplissage pour laquelle elle est disposée au niveau des socs d'ensemencement pour permettre un accès aisé lors du remplissage.

La trémie est portée par deux bras basculants formant un parallélogramme déformable.

Cette disposition pose des problèmes en ce qui concerne la résistance desdits bras du fait du poids important de la trémie et des secousses auxquelles elle peut être soumise tant au cours du travail dans les champs qu'au cours des déplacements dans les chemins et sur route.

Ces problèmes sont accentués lorsque le passage des semences de la trémie vers les socs d'ensemencement est fait par gravité et non comme dans le document cité ci-dessus à l'aide d'un dispositif pneumatique de propulsion car la trémie doit être placée à environ 2 mètres au-dessus du sol.

Il est de plus nécessaire d'abaisser la trémie pour permettre la circulation du tracteur portant le semoir en dehors des champs, du fait que celle-ci est alors positionnée plus haut que la cabine du tracteur.

Par ailleurs, le remplissage de la trémie nécessite de disposer de moyens tels que des échelles pour atteindre l'ouverture supérieure de la trémie.

La présente invention tend à proposer un semoir à trémie unique positionnée en hauteur ne présentant pas les inconvénients ci-dessus.

A cet effet, elle propose un semoir du type comportant au moins un élément semeur et une trémie unique supportée par un bâti, ladite trémie présentant au moins une ouverture de sortie raccordée par une tubulure flexible à un élément semeur, et étant mobile en rotation autour d'une axe horizontal afin de passer d'une position de travail à une position de remplissage, une face de la trémie disposée verticalement en position de travail devenant la face horizontale supérieure de ladite trémie en position de remplissage, caractérisé en ce que l'axe horizontal est, dans la position de travail de la trémie, disposé à l'extérieur et en-dessous de celle-ci de sorte qu'en position de travail, la trémie est positionnée en hauteur, sa face supérieure étant à environ 2 mètres du sol, tandis qu'en position de remplissage la face supérieure est disposée dans une position basse, à environ 1,5 mètre du sol, et en ce que la position de remplissage du semoir est également la position de transport.

Le semoir selon l'invention est encore remarquable en ce que :
- une porte est disposée dans ladite face verticale devenant la face horizontale supérieure de la trémie en position de transport et de remplissage de manière à permettre l'accès à ladite trémie et son remplissage,
- la trémie est supportée par un châssis constitué d'un portique globalement en forme de U retourné fixé sur la tête d'attelage du semoir et de deux bras fixés sur ledit portique,
- la trémie présente deux flasques verticaux disposés de part et d'autre des bras du châssis et des tourillons forment l'axe horizontal de rotation de la trémie,
- des vérins sont montés mobiles en rotation autour d'axes des bras du châssis et ont leur tige de piston reliée par son extrémité libre sur un flasque de la trémie, la rotation de la trémie étant assurée par la commande desdits vérins de manière à sortir ou rentrer leurs tiges de piston,
- deux réservoirs sont fixés à la trémie de manière à faire assurer par ledit semoir une fonction supplémentaire d'épandage d'insecticide et/ou d'herbicide,
- les réservoirs comportent des portes prévues dans les faces devenant les faces horizontales supérieures dans la position de transport et de remplissage de la trémie.

L'invention sera mieux comprise grâce à la description qui va suivre donnée à titre d'exemple non limitatif en référence aux dessins annexés dans lesquels :
- la figure 1 est une vue de devant du semoir selon l'invention,
- la figure 2 est une vue de côté du semoir selon l'invention dans sa position de travail,
- la figure 3 est une vue de côté du semoir selon l'invention dans sa position de transport et de remplissage.

Comme visible sur les dessins, le semoir selon l'invention est globalement constitué d'une tête d'attelage 1 portant une poutre 2 sur laquelle sont montés les éléments semeurs 3 et d'un châssis 4 supportant la trémie 5.

Dans l'exemple de réalisation représenté au dessin, le châssis 4 est constitué d'un portique 41 globalement en forme de U retourné et de deux bras 40 fixés sur ledit portique qui sont disposés dans des plans verticaux et inclinés vers l'arrière de manière telle que la trémie 5 soit à l'arrière de ladite tête d'attelage, globalement au-dessus des éléments semeurs 3.

Le semoir repose sur le sol par l'intermédiaire de roues d'entraînement 7 portées par les bras 6. De manière connue en soi, des roues tasseuses 8 assurent le recouvrement des graines semées par de la terre.

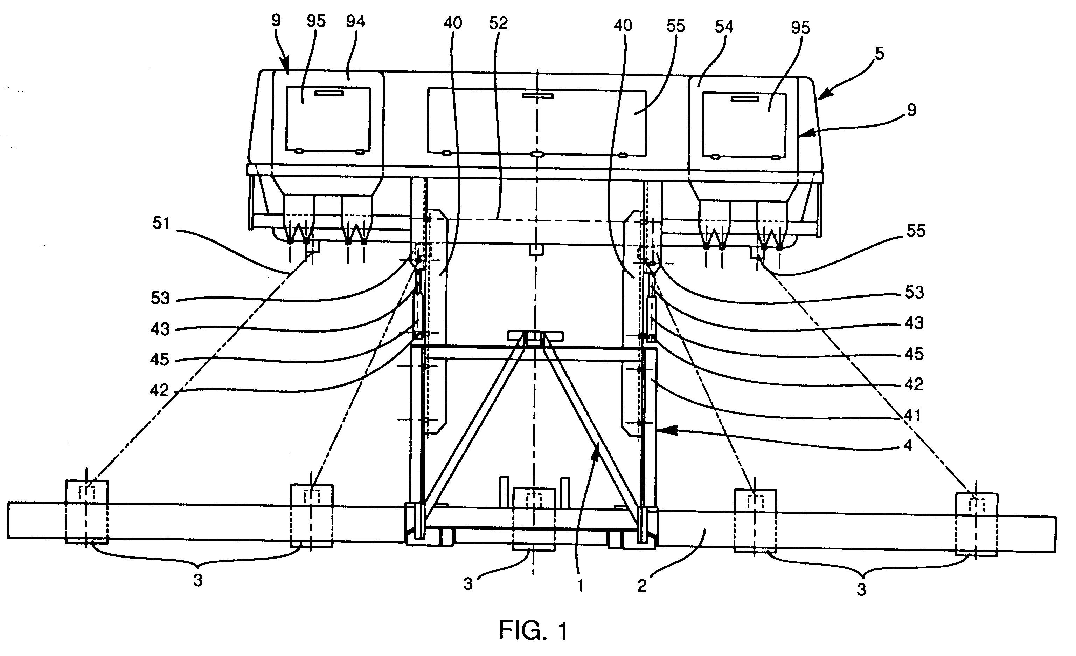

Le semoir est représenté à la figure 1 sans les roues d'entraînement et roues tasseuses afin de ne pas compliquer inutilement le dessin.

La trémie a globalement la forme d'un parallélépipède rectangle et est disposée avec sa plus grande dimension dirigée perpendiculairement au sens d'avancement du tracteur.

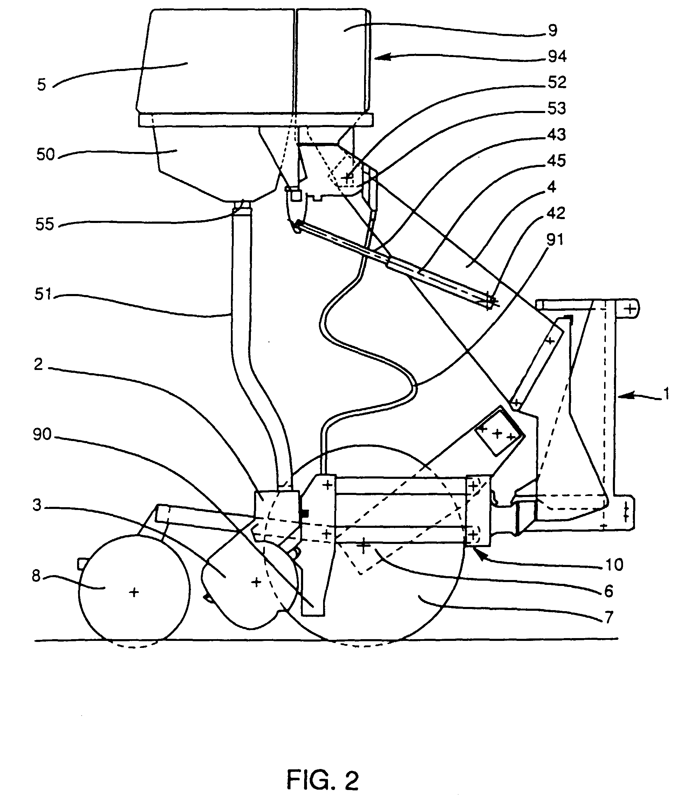

La trémie 5 est de largeur importante et, comme visible à la figure 2, son fond est conformé en entonnoirs 50.

Il y a autant d'entonnoirs 50 que d'éléments semeurs 3, l'ouverture de sortie 55 de chaque entonnoir 50 étant reliée par une tubulure flexible 51, par exemple transparente afin de constater aisément la présence ou l'absence de graines dans le semoir, à l'un des éléments semeurs.

Dans la position de travail représentée à la figure 1 et à la figure 2, la trémie est positionnée en hauteur, la face supérieure de la trémie 5 est par exemple située à environ 2 mètres du sol.

Par cette disposition en hauteur de la trémie, les grains contenus dans la trémie 5 peuvent descendre par gravité vers les éléments semeurs qui assurent la pose dans le sol d'une graine seule en des points régulièrement espacés du terrain lors de l'avancement du semoir tracté par un engin.

Dans l'exemple de réalisation représenté au dessin, le semoir assure une fonction supplémentaire d'épandage d'insecticide et/ou d'herbicide.

A cet effet, deux réservoirs 9 sont fixés à la trémie 5. Ces réservoirs sont de dimensions moins importantes que la trémie 5 et sont dans l'exemple représenté, situés près de chaque extrémité de ladite trémie. Les produits de traitement sont amenés des réservoirs 9 vers les éléments d'épandage 90 par des tubes flexibles 91

Suivant l'invention, la trémie 5 est montée mobile en rotation autour d'un axe horizontal 52.

Dans l'exemple représenté au dessin, cet axe horizontal 52 est disposé à l'extérieur du volume de stockage en un point situé près d'un flanc latéral perpendiculaire à la direction d'avancement et en dessous de la trémie.

Pour ce montage, la trémie présente deux flasques verticaux 53 disposés de part et d'autre des bras 40. Des tourillons non représentés au dessin assurent le montage avec possibilité de rotation de la trémie 5 sur lesdits bras 40.

Des vérins 45 sont montés mobiles en rotation autour d'axes 42 des bras 40.

Chaque tige de piston 43 des vérins 45 est reliée par son extrémité libre sur un flasque 53 de la trémie 5.

Lorsque la trémie est dans sa position de travail représentée aux figures 1 et 2, les tiges de piston sont sorties. La trémie est disposée avec les ouvertures de sortie 55 des entonnoirs 50 dans sa face horizontale inférieure.

En fin de travail, lorsqu'il veut sortir du champ et tracter le semoir selon l'invention sur une route, ou lorsque la trémie 5 est vide et qu'il est nécessaire de la remplir, le conducteur du tracteur auquel est attelé le semoir commande les vérins 45 de manière à rentrer leurs tiges de piston 43.

Le raccourcissement de la longueur des vérins 45 qui s'ensuit se traduit par un basculement de la trémie et une rotation de celle-ci autour de l'axe horizontal 52.

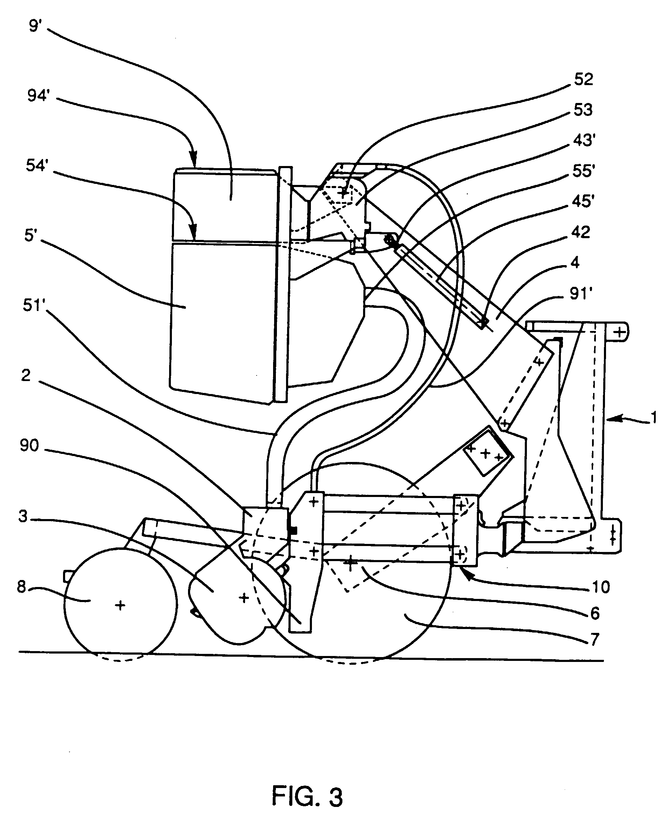

L'on a noté par des primes la position prise par les vérins et la trémie à la fin de cette rotation, cette position est représentée à la figure 3.

Dans la position 5', les ouvertures de sortie 55' des entonnoirs 50 de la trémie sont disposés dans une face latérale verticale, tandis que la face 54 initialement disposée verticalement et dirigée vers l'avant du semoir devient la face 54' horizontale supérieure de la trémie.

La rotation de la trémie s'effectuant autour d'un axe disposé sur le côté de ladite trémie, il s'ensuit que la face supérieure de la trémie se trouve dans une position basse dans laquelle elle est disposée à environ 1,5 mètre du sol ce qui la rend aisément accessible.

Suivant l'invention, une porte 55 est disposée dans cette face 54 de manière à permettre l'accès à la trémie et son remplissage.

Lorsque le semoir avec la trémie dans cette disposition 5' est relevé par le système de relevage 10, la trémie n'est pas plus haute que la cabine du tracteur ce qui permet la circulation de celui-ci en dehors du champ.

C'est pourquoi cette position 5' de la trémie est appelée ici position de transport ou de remplissage.

Des portes 95 sont également prévues dans les faces 94 tournées vers l'avant des réservoirs 9 pour produits de traitement. Dans l'exemple représenté au dessin, ces faces 94 prennent une position 94' un peu plus élevée que la position 54' de la face avant de la trémie. Elles sont à environ 1,7 mètre du sol ce qui les rend également accessibles.

Comme on aura pu le comprendre, le semoir selon l'invention permet d'assurer une profondeur de mise en place des graine constante tout au long du travail tout en fournissant une machine facile à mettre en oeuvre, tant du point de vue du transport que du point de vue du remplissage. Pour faire passer la trémie du semoir d'une position à une autre, il suffit de commander les vérins 45 à partir du poste de pilotage du tracteur de manière à sortir ou rentrer leurs tiges de piston.

Il est bien entendu possible de disposer l'axe de rotation 52 en d'autres points, à condition qu'il reste décentré afin de permettre l'abaissement de la paroi supérieure horizontale de la trémie.

## Revendications

1. Semoir du type comportant au moins un élément semeur et une trémie unique supportée par un bâti, ladite trémie présentant au moins une ouverture de sortie raccordée par une tubulure flexible à un élément semeur et étant mobile en rotation autour d'une axe (52) horizontal afin de passer d'une position de travail à une position de remplissage, une face (54) de la trémie (5) disposée verticalement en position de travail devenant la face (54') horizontale supérieure de ladite trémie en position de remplissage, caractérisé en ce que l'axe (52) horizontal est, dans la position de travail de la trémie (5), disposé à l'extérieur et en-dessous de celle-ci de sorte qu'en position de travail, la trémie est positionnée en hauteur, sa face supérieure étant à environ 2 mètres du sol, tandis qu'en position de remplissage la face supérieure (54') est disposée dans une position basse, à environ 1,5 mètre du sol, et en ce que la position de remplissage du semoir est également la position de transport.

2. Semoir selon la revendication 1, caractérisé en ce que une porte (55) est disposée dans ladite face (54) verticale devenant la face horizontale supérieure (54') de la trémie en position de transport et de remplissage de manière à permettre l'accès à ladite trémie et son remplissage.

3. Semoir selon l'une quelconque des revendications précédentes, caractérisé en ce que la trémie (5) est supportée par un châssis (4) constitué d'un portique (41) globalement en forme de U retourné fixé sur la tête d'attelage (1) et de deux bras (40) fixés sur ledit portique.

4. Semoir selon la revendication 3, caractérisé en ce que la trémie (5) présente deux flasques verticaux (53) disposés de part et d'autre des bras (40) du châssis (4) et en ce que des tourillons forment l'axe horizontal (52) de rotation de la trémie (5).

5. Semoir selon la revendication 4, caractérisé en ce que des vérins (45) sont montés mobiles en rotation autour d'axes (42) des bras (40) du châssis (4) et ont leur tige de piston (43) reliée par son extrémité libre sur un flasque (53) de la trémie (5), la rotation de la trémie étant assurée par la commande desdits vérins (45) de manière à sortir ou rentrer leurs tiges de piston.

6. Semoir selon l'une quelconque des revendications précédentes, caractérisé en ce que deux réservoirs (9) sont fixés à la trémie (5) de manière à faire assurer par ledit semoir une fonction supplémentaire d'épandage d'insecticide et/ou d'herbicide.

7. Semoir selon la revendication 6, caractérisé en ce que les réservoirs (9) comportent des portes (95) prévues dans les faces (94) devenant les faces horizontales supérieures dans la position (5') de transport et de remplissage de la trémie.

## Patentansprüche

1. Sämaschine mit mindestens einem Säelement und einem einzigen, von einem Rahmen abgestützten Saatkasten, der mindestens eine Austrittsöffnung aufweist, die durch ein elastisches Rohr mit einem Säelement verbunden ist, und der zur Umstellung von einer Arbeitsposition in eine Befüllposition um eine horizontale Achse (52) drehbar ist, wobei eine in der Arbeitsposition vertikal angeordnete Seite (54) des Saatkastens (5) in der Befüllposition die horizontale Oberseite (54') des Saatkastens bildet,
dadurch gekennzeichnet, daß die horizontale Achse (52) in der Arbeitsposition des Saatkastens (5) außerhalb und unterhalb desselben liegt, so daß der Saatkasten in der Arbeitslage in einer hohen Lage angeordnet ist, in der sich seine Oberseite etwa 2 Meter über dem Boden befindet, während sich die Oberseite (54') in der Befüllposition in einer niedrigen Position etwa 1,5 Meter über dem Boden befindet, und daß die Befüllposition der Sämaschine auch die Transportposition bildet.

2. Sämaschine nach Anspruch 1,
dadurch gekennzeichnet, daß in der vertikalen Seite (54), die in der Transport- und Befüllposition die horizontale Oberseite (54') des Saatkastens bildet, eine Klappe (55) angeordnet ist, die Zugang zu dem Saatkasten gewährt und seine Befüllung ermöglicht.

3. Sämaschine nach einem der vorhergehenden Ansprüche,
dadurch gekennzeichnet, daß der Saatkasten (5) von einem Rahmen (4) abgestützt ist, der durch ein am Anbaubock (1) befestigtes, im wesentlichen umgekehrt U-förmiges Gestell (41) gebildet ist und durch zwei an dem Gestell angebrachte Arme (40).

4. Sämaschine nach Anspruch 3,
dadurch gekennzeichnet, daß der Saatkasten (5) zwei vertikale Flansche (53) aufweist, die beiderseits der Arme (40) des Rahmens (4) angeordnet sind, und daß die horizontale Drehachse (52) des Saatkastens (5) durch Zapfen gebildet ist.

5. Sämaschine nach Anspruch 4,
dadurch gekennzeichnet, daß Zylinder (45) um Achsen (42) der Arme (40) des Rahmens (4) drehbar angeordnet sind, deren Kolbenstange (43) an ihrem freien Ende mit einem Flansch (53) des Saatkastens (5) verbunden ist, wobei die Drehbewegung des Saatkastens von diesen Zylindern (45) durch Ausfahren oder Einfahren ihrer Kolbenstangen gesteuert wird.

6. Sämaschine nach einem der vorhergehenden Ansprüche,
dadurch gekennzeichnet, daß zwei Behälter (9) an dem Saatkasten (5) angebracht sind, so daß die Sämaschine zusätzlich zum Streuen eines Ungezieferbekämpfungsmittels und/oder eines Unkrautbekämpfungsmittels verwendet werden kann.

7. Sämaschine nach Anspruch 6,
dadurch gekennzeichnet, daß die Behälter (9) Klappen (95) aufweisen, die in den Seiten (94) ausgebildet sind, welche in der Transport- und Befüllposition (5') des Saatkastens die horizontalen Oberseiten bilden.

## Claims

1. Sowing machine of the type comprising at least one sowing element and a single hopper supported by a supporting structure, the said hopper having at least one outlet opening connected by a flexible tube to a sowing element and being rotatable about a horizontal axis (52) in order to pass from a working position to a filling position, a face (54) of the hopper (5) that is arranged vertically in the working position becoming the upper horizontal face (54') of the said hopper in the filling position, characterised in that in the working position of the hopper (5), the horizontal axis (52) is arranged outside of and below the hopper, such that in the working position the hopper is positioned at a height, its upper face being approximately 2 metres from the soil, while in the filling position the upper face (54') is arranged in a low position, approximately 1.5 metres from the soil, and in that the filling position of the sowing machine is also the transport position.

2. Sowing machine according to claim 1, characterised in that a door (55) is arranged in the said vertical face (54) which becomes the upper horizontal face (54') of the hopper in the transport and filling position, so as to allow access to the said hopper and the filling thereof.

3. Sowing machine according to one of the preceding claims, characterised in that the hopper (5) is supported by a framework (4) which comprises a gantry (41), which is overall in the form of an upturned U fixed to the coupler head (1), and two arms (40) fixed to the said gantry.

4. Sowing machine according to claim 3, characterised in that the hopper (5) has two vertical side plates (53) arranged on either side of the arms (40) of the framework (4), and in that bearing journals form the horizontal axis (52) of rotation of the hopper (5).

5. Sowing machine according to claim 4, characterised in that jacks (45) are mounted in a manner such that they can rotate about axes (42) of the arms (40) of the framework (4) and their piston rod (43) is connected by its free end to a side plate (53) of the hopper (5), the rotation of the hopper being ensured by the control of the said jacks (45) so as to extend or retract their piston rods.

6. Sowing machine according to one of the preceding claims, characterised in that two containers (9) are fixed to the hopper (5) so as to ensure by means of the said sowing machine a supplementary function of spreading insecticide and/or herbicide.

7. Sowing machine according to claim 6, characterised in that the containers (9) contain doors (95) provided in the faces (94) which become the upper horizontal faces in the transport and filling position (5') of the hopper.
